# FASCICULE DE BREVET EUROPEEN

(11) **EP 1 435 540 B1**
(45) Date de publication et mention de la délivrance du brevet: **09.08.2006**
(21) Numéro de dépôt: 03293178.4
(22) Date de dépôt: 16.12.2003
(51) Int. Cl.: G02F 1/19

(54) **Dispositif optique à indice de réfraction variable comprenant un conducteur d'ions**
Ionenleiter umfassende optische Vorrichtung mit variablem Brechungsindex
Optical device having a variable refractive index comprising a ion conductor

(30) Priorité: 03.01.2003 FR 0300028
(43) Date de publication de la demande: 07.07.2004
(73) Titulaire: ALCATEL, 75008 Paris (FR)
(72) Inventeur: Andrieu, Xavier, 91220 Bretigny sur Orge (FR); Pastouret, Alain, 91940 Les Ulis (FR); Jacquet, Joel, 91470 Limours (FR); Barusseau, Sylvie, 91220 Le Plessis Pate (FR)
(74) Mandataire: Lamoureux, Bernard

(56) Documents cités:
- EP-A- 0 496 278
- EP-A- 1 081 538
- EP-A- 1 298 469
- CH-A- 627 860
- US-A1- 2001 019 800

## Description

La présente invention se rapporte à un dispositif optique destiné à transmettre de la lumière à travers un milieu dont l'indice de réfraction est modifiable selon les besoins de l'utilisateur. L'invention se rapporte aussi à un appareil utilisant ce dispositif optique. Elle s'étend en outre au procédé permettant de faire varier l'indice de réfraction d'un tel dispositif.

Un dispositif optique destiné à transmettre la lumière, aussi appelé guide d'onde, comprend une partie guidante ou coeur et une partie gainante destinée à confiner la lumière dans le coeur. Il peut s'agir d'un guide, dont le coeur est circulaire (fibre optique) ou rectangulaire, entouré d'une gaine optique d'indice moindre. Il peut aussi s'agir d'un guide plan, comportant également une couche guidante et une gaine, déposé sur un substrat servant de support. Depuis longtemps il existe des guides d'onde à base de verre siliceux. Des guides d'ondes à base de polymères organiques ont ensuite été développés.

Le fait de pouvoir modifier l'indice de réfraction d'un guide trouve de nombreuses applications dans les composants optiques. Ainsi les filtres sélectifs en longueur d'onde sont des composants essentiels pour les systèmes de communication. Les filtres permettent la séparation spectrale en réfléchissant certaines longueurs d'onde et en transmettant les autres. La fonction de filtre est notamment assurée par des réseaux de diffraction dits réseaux de Bragg (Bragg grating). Un réseau de Bragg est un réflecteur sélectif en longueur d'onde ayant une structure périodique qui crée une modulation d'indice. Il est caractérisé par sa bande passante, c'est à dire le domaine de longueur d'onde qu'il laisse passer. Un réseau donné présente généralement une réflexion maximale à une certaine longueur d'onde λ_{b}, appelée "longueur d'onde de Bragg". Elle est définie par la relation : λ_{b} = 2.n_{eff}.Λ, où Λ est le pas du réseau de Bragg et n_{eff} est l'indice de réfraction effectif moyen du mode guidé fondamental incident sur le réseau. Lorsque l'indice peut être modifiée, la longueur d'onde de Bragg λ_{b} peut l'être aussi et le filtre devient accordable. Les réseaux de Bragg peuvent être réalisés par des procédés optiques, mécaniques ou chimiques entraînant une modification physique du support. Depuis peu, il est possible de transformer une petite portion d'un guide d'onde en un filtre en induisant une variation périodique de l'indice de réfraction du coeur selon des traits régulièrement espacés d'une distance fixée.

D'une façon générale, le changement de l'indice de réfraction effectif moyen n_{eff} d'un guide d'onde simple permet d'ajuster une longueur optique dans un système. De cette manière on obtient par exemple un ajustement fin des fréquences caractéristiques du système. Les lasers accordables, les filtres accordables et les modulateurs sont d'autres exemples de composants qui utilisent de tels guides à indice variable.

On peut citer par exemple un interféromètre à deux guides, de type MACH-ZEHNDER ou MICHELSON, qui est utilisé pour obtenir notamment un filtre accordable ou un modulateur. Dans ce cas on fait varier l'indice de réfraction dans l'un des deux guides afin de modifier la transmission de l'interféromètre.

Le filtre FABRY-PERROT est un interféromètre à ondes multiples dans lequel un changement d'indice provoque un décalage des fréquences de résonance et qui peut être utilisé pour obtenir un filtre accordable. Un laser accordable est un autre cas particulier de ce type de filtre où la longueur optique de la cavité peut être ajustée afin de contrôler très précisément la longueur d'onde d'émission. Pour cela on dispose dans la cavité une section de phase qui est un guide d'onde dont l'indice est modifiable.

On peut encore citer les multiplexeurs/démultiplexeurs à réseau de guides, parfois appelés "phasar" ou "AWG". La possibilité de modifier l'indice de réfraction des guides peut être utilisée pour accorder la réponse spectrale du composant.

Bien entendu, on peut aussi modifier l'indice d'un guide simple ne faisant pas partie d'un système interférométrique. Par exemple dans une jonction, il peut être important de modifier l'indice de réfraction d'un guide par rapport à un autre. Par exemple dans une jonction en Y, en changeant l'indice de l'un des deux bras de sortie, on va diriger le signal d'entrée vers l'une ou l'autre sortie. On a ainsi formé un commutateur ("digital optical switch"). Le besoin de tels systèmes est très important pour toutes les applications de commutation.

Le brevet européen EP-0 496 278 sur lequel est basé le préambule de la première revendication décrit un dispositif optique dont l'indice de réfraction est contrôlé par un procédé basé sur le principe que l'indice de réfraction d'un matériau contenant des ions mobiles, c'est à dire un conducteur d'ions, varie de manière réversible en fonction du champ électrique qui lui est appliqué. Le dispositif optique comprend un conducteur d'ions, constitué d'une matière transparente de masse moléculaire élevée contenant des ions mobiles, et au moins une paire d'électrodes en regard l'une de l'autre à travers le conducteur d'ions et en contact avec le conducteur d'ions. Lorsque le champ électrique est appliqué au conducteur par l'intermédiaire des électrodes, l'indice de réfraction est modifié dans au moins une zone du conducteur d'ions conformément au champ électrique appliqué. Sous l'effet de la différence de potentiel appliquée aux électrodes, les ions contenus dans le conducteur se déplacent dans le matériau, de telle sorte que l'indice de réfraction du conducteur d'ions s'élève dans l'une de ses interfaces avec les électrodes et chute dans l'autre interface. Le dispositif fonctionne à basse tension, par exemple 20V.

La capacité des électrodes décrites est très faible car l'accumulation des ions ne s'effectue que sur leur surface. De ce fait dès que la tension ne sera plus maintenue, la variation d'indice interfacial va rapidement disparaître par autodécharge. En outre la modification de l'indice de réfraction ainsi obtenue est limitée à l'interface de contact entre le conducteur d'ions et les électrodes. La modification est de ce fait difficilement réversible et entraîne un phénomène de vieillissement. Enfin ce dispositif est d'utilisation peu aisée. Il a pour inconvénient de nécessiter le maintien permanent des électrodes sous une tension relativement élevée (20V) pour conserver l'indice de réfraction souhaité, ce qui conduit à une consommation de courant électrique non négligeable.

La présente invention a pour but d'éliminer les inconvénients de l'art antérieur et, en particulier, de proposer un dispositif dans lequel la variation d'indice de réfraction réversible est obtenue dans la totalité du volume du matériau tout en nécessitant des tensions plus faibles (< 20 Volts) que dans les procédés connus.

L'objet de la présente invention est un dispositif optique comprenant un conducteur d'ions constitué d'une matière transparente à la lumière contenant des ions mobiles et au moins une paire d'électrodes, l'indice de réfraction dans au moins une zone dudit conducteur d'ions étant susceptible de varier sous l'effet de la tension appliquée entre lesdites électrodes, caractérisé en ce que lesdites électrodes sont aptes à absorber et désorber des ions et sont en contact ionique avec ledit conducteur d'ions.

Une tension appliquée aux électrodes fait varier la concentration ionique dans le conducteur. Cette variation de concentration se propage par diffusion au sein du conducteur ionique. La variation de la concentration dépend de la capacité des électrodes à absorber et à désorber les ions, et de la quantité d'ions présents dans le conducteur. La variation de concentration des ions induit une variation de l'indice de réfraction du conducteur.

Les électrodes utilisées contiennent une matière électrochimiquement active dont une fonction est d'absorber et de retenir les ions extraits du conducteur ionique. Chacune des électrodes contient une matière électrochimiquement active qui est choisie parmi les matières actives connues aptes à remplir cette fonction et en particulier parmi un charbon actif, un polymère conducteur et un matériau d'insertion apte à insérer des ions dans sa structure.

Selon une première variante, les électrodes contiennent comme matière électrochimiquement active un charbon actif. De préférence on utilise un charbon actif ayant une surface spécifique supérieure à 200m²/g. Ces électrodes sont aussi appelées électrodes "bloquantes" car elles stockent les ions selon le principe de la double couche électrochimique de Helmotz. La quantité d'ions susceptible d'être stockée est proportionnelle à la surface spécifique du matériau. Dans ce cas la quantité Q d'ions absorbés par les électrodes est proportionnelle à la tension V appliquée entre les deux électrodes selon la relation : Q = C x V dans laquelle C est la capacité des électrodes à absorber et désorber des ions, exprimée en Farad.

Selon une deuxième variante, une première électrode contient comme matière électrochimiquement active un matériau apte à insérer des cations dans sa structure et une seconde électrode contient comme matière électrochimiquement active un matériau d'insertion apte à insérer des anions dans sa structure. De préférence le matériau apte à insérer des cations dans sa structure est choisi parmi un oxyde de métaux de transition, un sulfure, un sulfate et leurs mélanges. Et de préférence encore le matériau apte à insérer des anions dans sa structure est choisi parmi un oxyde graphitique, un graphite, un coke, un noir de carbone et un carbone vitreux. Parmi les oxydes de métaux de transition utilisables dans la présente invention, on peut citer l'oxyde de vanadium, les oxydes lithiés de manganèse, de nickel et/ou de cobalt, et leurs mélanges.

Selon une troisième variante, les électrodes contiennent comme matière électrochimiquement active un polymère conducteur. De préférence, le polymère conducteur est choisi parmi un polypyrrole, un polythiophène, une polyaniline, un polyacéthylène et un polyparaphénylène. La plupart de ces matériaux peuvent être dopés N ou P. Un matériau dopé P absorbera les anions (ion chargé négativement) et un matériau dopé N absorbera les cations (ion chargé positivement).

Il est bien entendu possible de combiner entre elles les électrodes correspondant aux trois variantes précédemment décrites.

Dans la présente invention les électrodes sont des électrodes volumiques, c'est à dire que la totalité de leur volume est impliquée dans la réaction électrochimique. Elles possèdent donc une capacité élevée. De ce fait dès que la tension ne sera plus maintenue, l'effet mémoire jouera de manière importante et la variation d'indice obtenu ne variera quasiment pas. Cependant pour conserver l'indice de réfraction à la valeur précise choisie, il est préférable de maintenir le potentiel appliqué. Ainsi toute dérive est évitée pour une consommation énergétique pratiquement nulle, car très inférieure à 1µA.

Le dispositif selon la présente invention comprend un conducteur d'ions contenant des ions mobiles. Le conducteur comprend au moins un cation et au moins un anion. Le cation peut être choisi parmi Li⁺, Na⁺, K⁺, Ca²⁺ et NH₄⁺. L'anion peut être choisi parmi CF₃SO₃⁻, N(CF₃SO₂)₂⁻, N(C₂F₅SO₂)₂⁻, C(CF₃SO₂)₃⁻, CF₃CO₃⁻, ClO₄⁻, BF₄⁻, AsF₆⁻, PF₆⁻, BH₄⁻, SCN⁻, N₃⁻, I⁻ et Br⁻.

De préférence le matériau constituant le conducteur d'ions est choisi parmi un polymère contenant un sel dissocié et un polymère contenant un sel dissout dans un solvant.

On entend par polymère contenant un sel dissocié, un polymère qui complexe un sel ionisable. Dans ce cas le polymère joue un rôle actif vis à vis du sel car il contribue à sa dissociation et à la solvatation des ions. On le nomme aussi polymère sec car il ne contient pas de solvant. On peut choisir comme polymère contenant un sel dissocié, un polyéther ou un polyoxyéthylène.

On entend par polymère contenant un sel dissout dans un solvant, un polymère gonflé par un solvant qui contient un sel dissocié. Le polymère est dit alors gélifié ou plastifié, et la solution liquide de sel est souvent appelé plastifiant. Dans ce cas, le polymère joue un rôle passif vis à vis du sel car il ne contribue que de manière négligeable à sa dissociation et à la solvatation des ions. On peut choisir comme polymère contenant un sel dissout dans un solvant : un polymère thermoplastique, un homopolymère fluoré ou un copolymère fluoré. Dans le cas où le polymère contenant un sel dissout dans un solvant est un polymère thermoplastique, il est choisi de préférence parmi un polyacrylonitrile, un polyméthacrylate de méthyle, un polychlorure de vinyle et leurs copolymères.

Parmi les sels utilisables dans la présente invention, on pourra choisir de manière non exhaustive parmi un sel de lithium, un sel de sodium, un sel de potassium, un sel de calcium, un sel d'ammonium, et un mélange de ces sels. Comme sel de lithium on choisira de préférence le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂ (LiTFSI), le trifluorométhanesulfoneméthide de lithium LiC(CF₃SO₂)₃ (LiTFSM) ou le bis(perfluoroéthylsulfonimide) de lithium LiN(C₂F₅SO₂)₂ (BETI). Comme sel d'ammonium on peut utiliser le chlorure de tétralkylammonium.

Le conducteur d'ions à base de polymère contenant des ions mobiles comme décrit précédemment est inclu dans un guide d'onde. Ce guide d'onde comporte une partie guidante qui est entourée d'une partie gainante. Lorsqu'on souhaite modifier l'indice de réfraction de la partie guidante conducteur ionique et dans le cas où les électrodes ne sont pas au contact direct de la partie guidante mais en sont séparées par une couche du matériau de la partie gainante, ce matériau doit être également conducteur ionique afin d'assurer la continuité du contact ionique entre les électrodes et la partie guidante.

Selon un premier mode de réalisation de l'invention, les électrodes sont au contact physique de la partie guidante.

Selon une variante, la partie guidante et la partie gainante sont conducteur ionique. Dans ce cas, la variation d'indice affectera aussi bien la partie guidante que la partie gainante.

Selon une autre variante, la partie guidante est conducteur ionique et la partie gainante n'est pas conducteur ionique. Dans ce cas, la variation d'indice affectera seulement la partie guidante.

Selon un deuxième mode de réalisation, les électrodes sont disposées au contact physique de la partie gainante, mais ne sont pas en contact avec la partie guidante.

Selon une variante, la partie guidante et la partie gainante sont conducteur ionique. Les électrodes sont alors en contact ionique avec la partie guidante par l'intermédiaire de la partie gainante. Lors de l'application d'une tension entre les électrodes, la variation de concentration du sel se propage par diffusion dans tout le volume de la partie gainante et de la partie guidante. Compte-tenu des très faibles dimensions d'une fibre optique ou d'un guide d'onde, cette diffusion s'effectue quasi-instantanément.

Selon une autre variante, la partie guidante n'est pas conducteur ionique et la partie gainante est conducteur ionique. Les électrodes sont alors en contact ionique seulement avec la partie gainante. Dans ce cas la variation de concentration du sel, et donc la variation d'indice de réfraction, ne se produit que dans la partie gainante, ce qui résulte en une modification de l'indice de réfraction effectif moyen n_{eff} du guide d'onde.

Selon un troisième mode de réalisation, les électrodes sont respectivement disposées de part et d'autre de la partie guidante.

Selon un quatrième mode de réalisation, les électrodes sont respectivement disposées du même côté de ladite partie guidante. Lors de l'application d'une tension entre les électrodes, la variation de concentration du sel se propagera par diffusion dans tout le volume de la partie gainante et de la partie guidante quelle que soit la position relative des électrodes.

Selon une première forme d'exécution, le guide d'onde est une fibre optique comprenant un coeur constituant la partie guidante et une gaine optique constituant la partie gainante. Cette fibre est aussi appelée "fibre optique plastique" (POF).

Selon une deuxième forme d'exécution, le guide d'onde est un guide d'onde plan, déposé sur un substrat, comprenant une couche guidante, constituant la partie guidante, entourée d'une gaine, constituant la partie gainante. Le guide d'onde peut en outre être entouré d'un superstrat.

Bien entendu les fibres optiques et les guides d'ondes auxquels s'applique l'invention peuvent être fabriqués en employant tout procédé connu.

Selon une forme particulière de réalisation de la présente invention, la partie guidante comprend un réseau de Bragg.

L'avantage le plus remarquable de la présente invention réside dans le fait que la modification de l'indice subsiste pendant une période de temps relativement longue même lorsque la tension cesse d'être appliquée, à la différence de ce qui est connu. Il suffit d'appliquer une tension différente pour faire varier à nouveau l'indice. Ainsi l'utilisateur pourra accorder la valeur de l'indice à ses besoins en permanence. En outre la variation d'indice s'applique à la totalité du volume du conducteur ionique. La réversibilité est excellente : 10 millions de cycles ont été effectués avec des électrodes bloquantes ayant comme matière active du charbon actif.

L'invention est plus particulièrement destinée à être utilisée avec des guides d'onde de type "monomode".

La présente invention a encore pour objet un procédé pour modifier l'indice de réfraction d'un conducteur d'ions, constitué d'une matière transparente à la lumière contenant des ions mobiles, au moyen d'au moins une paire d'électrodes, caractérisé en ce qu'il comporte les étapes suivantes :
- on dispose les électrodes aptes à absorber et désorber des ions en contact ionique avec le conducteur ayant un indice de réfraction initial,
- on applique une tension inférieure à 20 Volts entre les électrodes de manière à provoquer la variation de l'indice initial,
- on obtient ledit conducteur ionique avec un indice de réfraction modifié,
- on supprime la tension appliquée, et ledit indice de réfraction modifié est maintenu.

Le procédé selon l'invention a comme avantage de nécessiter l'application de tensions plus faible (20 Volts) que dans les procédés connus (20 Volts) pendant une courte durée. La tension appliquée est de préférence au plus égale à 5 Volts (≤5 Volts). Au-delà des réactions irréversibles pourraient se produire qui feront vieillir prématurément le dispositif. Il n'est pas nécessaire d'appliquer la tension pendant une durée très longue. La tension peut être appliquée pendant une durée comprise entre 10 et 100 millisecondes.

D'autres caractéristiques et avantages de la présente invention apparaîtront au cours des exemples suivants de réalisation, donnés bien entendu à titre illustratif et non limitatif, et dans le dessin annexé.
La figure 1 représente en coupe longitudinale un premier mode de réalisation de l'invention dans lequel le conducteur ionique est une fibre optique.
La figure 2 représente en coupe transversale un deuxième mode de réalisation de l'invention dans lequel le conducteur ionique est un guide d'onde plan.
La figure 3 montre une variante du deuxième mode de réalisation dans lequel la disposition des électrodes est différente.
La figure 4 représente en coupe transversale un troisième mode de réalisation de l'invention dans lequel le conducteur ionique est un guide d'onde plan.
La figure 5 montre une variante du troisième mode de réalisation dans lequel la disposition des électrodes est différente.
La figure 6 représente en coupe transversale un quatrième mode de réalisation de l'invention dans lequel le conducteur ionique est un guide d'onde plan.
La figure 7 représente en coupe longitudinale un cinquième mode de réalisation de l'invention dans lequel le conducteur ionique est un guide d'onde comprenant un réseau de Bragg.
La figure 8, analogue à la figure 7, montre une variante du cinquième mode de réalisation dans lequel la disposition des électrodes est différente.

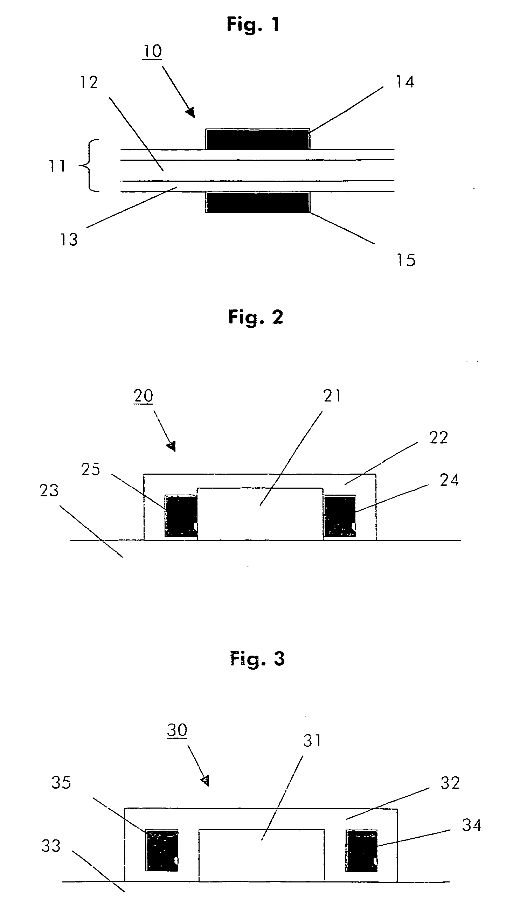

La figure 1 représente un dispositif **10** selon l'invention comportant une fibre optique **11** comprenant un coeur **12** entouré d'une gaine optique **13.** Le coeur **12,** d'indice de réfraction n₁₂, est constitué d'un matériau comprenant un mélange composé de 80% en poids de O', O'-bis (2-aminopropyl) polyéthylène glycol 1900 (vendu sous la marque "JEFFAMINE" par la société HUNTSMAN) et de 20% en poids d'éthylène glycol diglycidyl éther (fourni par la société ALDRICH), dans lequel on ajoute un sel qui est de l'iodure de sodium Nal à la concentration de 1 M, et un catalyseur de réticulation qui est du perchlorate de lithium LiClO₄ à la concentration de 0,1 M.

La gaine optique **13,** ayant un indice de réfraction n₁₃ inférieur à n₁₂, est constituée d'un matériau analogue à celui du coeur dans lequel un additif fluoré a été ajouté afin d'en diminuer l'indice de réfraction. Le dispositif **10** comporte en outre une première électrode **14** et une seconde électrode **15** disposées de part et d'autre de la fibre optique **11**. Les électrodes **14** et **15** sont en contact ionique avec le coeur **12** par l'intermédiaire de la gaine **13,** elle-même conducteur ionique. Les deux électrodes **14** et **15** sont identiques et constituées d'un mélange comprenant 50% en poids de charbon actif BRX fabriqué par la société NORIT et de 50% en poids du matériau constitutif du coeur **12**.

Le dispositif **20** selon l'invention, représenté sur la figure 2, comporte un guide d'onde plan comprenant une couche guidante **21,** ayant un indice de réfraction n₂₁, constituée d'un matériau analogue à celui du coeur **12** de la figure 1, mais dans lequel un additif soufré a été ajouté afin d'en augmenter l'indice de réfraction. La couche guidante **21** est entourée d'une gaine **22,** ayant un indice de réfraction n₂₂ inférieur à n₂₁, constituée d'un matériau analogue à celui du coeur **12** de la figure 1. La couche guidante **21,** entourée de la gaine **22,** est déposée sur un substrat **23** qui est de préférence en silicium Si ou en phosphorure d'indium InP. Le dispositif **20** comporte en outre une première électrode **24** et une seconde électrode **25** disposées de part et d'autre du guide d'onde et au contact physique de la couche guidante **21** : elles sont ainsi en contact ionique avec la couche guidante **21.** Les deux électrodes **24** et **25** sont identiques et constituées d'un matériau analogue à celui des électrodes **14** et **15** de la figure 1.

On applique entre les deux électrodes **24** et **25** une tension de 2,2 Volts afin de provoquer une variation de l'indice n₂₁ de la couche guidante **21** du guide d'onde. On obtient une variation Δn₂₁ = 5.10⁻². La capacité du dispositif **20** est de 0,02 Farad. Une fois obtenue la variation d'indice Δn₂₁, si on souhaite maintenir la tension entre les électrodes **24** et **25,** on observe un courant qui est très inférieure à 1µA. Si on supprime la tension imposée, la variation d'indice se maintient au moins pendant plusieurs heures. Le retour à l'état initial s'effectue ensuite très lentement. Dans le cas présent, la gaine **22** est également constituée d'un matériau conducteur d'ions. Par diffusion, il se produit simultanément une variation de l'indice de réfraction n₂₂ de la gaine **22.**

La figure 3 montre un autre dispositif **30** selon l'invention comportant un guide d'onde plan comprenant une couche guidante **31,** ayant un indice de réfraction n₃₁, entourée d'une gaine **32,** ayant un indice de réfraction n₃₂ inférieur à n₃₁, constituée d'un matériau analogue à celui de la gaine optique **13** de la figure 1. La couche guidante, constituée d'un matériau analogue à celui du coeur **12** de la figure 1 mais ne contenant pas de sel Nal (iodure de sodium), n'est pas conductrice ionique. La couche guidante pourrait aussi être constituée de silice. Le guide d'onde est déposé sur un substrat **33** analogue à celui de la figure 2. Le dispositif **30** comporte en outre une première électrode **34** et une seconde électrode **35** disposées dans la gaine **32** de part et d'autre de la partie guidante **31**, mais qui ne sont pas en contact physique avec la partie guidante **31**. Le matériau constitutif de la gaine **32** étant conducteur ionique, les électrodes **34** et **35** sont ainsi en contact ionique avec la couche guidante **31** par l'intermédiaire de la gaine **32.** Les deux électrodes **34** et **35** sont identiques et constituées d'un matériau analogue à celui des électrodes **14** et **15** de la figure 1.

De même que précédemment, on applique entre les deux électrodes **34** et **35** une tension de 2,2 Volts afin de provoquer une variation de l'indice n₃₂ de la gaine **32** du guide d'onde. On obtient une variation Δn₃₂ = 5.10⁻². La capacité du dispositif **30** est de 0,02 Farad. Une fois obtenue la variation d'indice Δn₃₂, si on souhaite maintenir la tension entre les électrodes **34** et **35,** on observe un courant qui est très inférieure à 1µA. Si on supprime la tension imposée, la variation d'indice se maintient au moins pendant plusieurs heures. Le retour à l'état initial s'effectue ensuite très lentement. Dans le cas présent, le matériau constitutif de la couche guidante **31** n'est pas conducteur ionique puisqu'il de contient pas de sel (Nal). Il ne produit donc pas de variation de l'indice de réfraction n₃₁ de la couche guidante **31.** L'utilisation d'une telle couche guidante dont le matériau constitutif n'est pas conducteur d'ion a pour avantage de permettre l'optimisation des caractéristiques optiques du matériau utilisé sans autre considération.

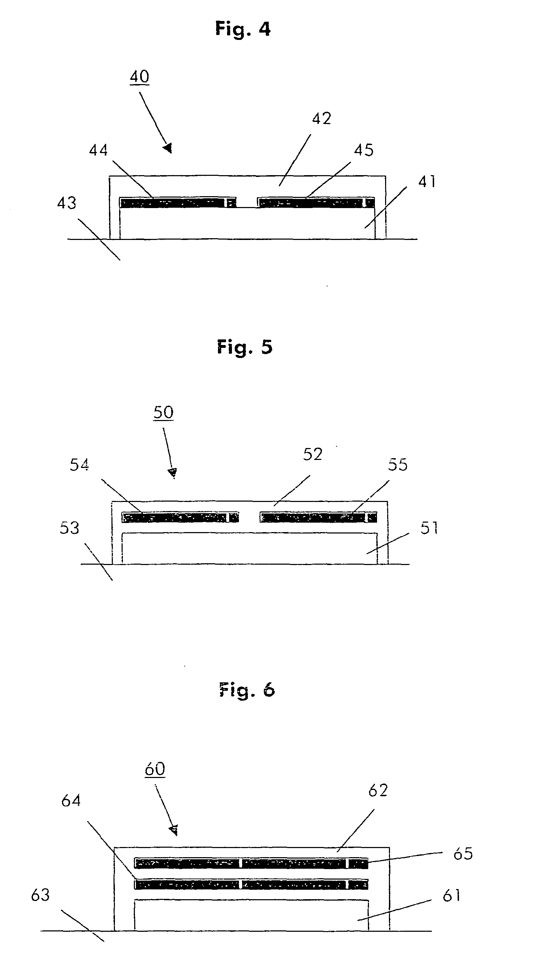

Dans le dispositif **40** de la figure 4, on a représenté un guide d'onde plan comprenant une couche guidante **41,** ayant un indice de réfraction n₄₁, constituée d'un matériau analogue à celui du coeur **12** de la figure 1. La couche guidante **41** est entourée d'une gaine **42,** ayant un indice de réfraction n₄₂ inférieur à n₄₁, constituée d'un matériau analogue à celui de la gaine optique **13** de la figure 1. Le guide d'onde est déposé sur un substrat **43** analogue à celui de la figure 2. Le dispositif **40** comporte en outre une première électrode **44** et une seconde électrode **45** disposées du même côté et au contact physique de la couche guidante **41** : elles sont ainsi en contact ionique avec la couche guidante **41.** L'électrode **44** est constituée d'un mélange comprenant 50% en poids de polythiophène et de 50% en poids du matériau constitutif du coeur **12** de la figure 1. L'électrode **45** est constituée d'un mélange comprenant 50% en poids de polypyrrole et de 50% en poids du matériau constitutif du coeur **12** de la figure 1.

Dans le dispositif **50** de la figure 5, on a représenté un guide d'onde plan analogue à celui de la figure 4 comprenant une couche guidante **51,** ayant un indice de réfraction n₅1, entourée d'une gaine **52,** ayant un indice de réfraction n₅₂ inférieur à n₅₁. Le guide d'onde est déposé sur un substrat **53** analogue à celui de la figure 2. Le dispositif **50** comporte en outre une première électrode **54** et une seconde électrode **55** disposées dans la gaine **52**, du même coté de la couche guidante **51** et en contact ionique avec elle par l'intermédiaire du matériau conducteur ionique de la gaine **52**. Les électrodes **54** et **55** sont identiques et constituées d'un matériau analogue à celles de la figure 4.

La figure 6 montre un autre dispositif **60** selon l'invention comportant un guide d'onde plan comprenant une couche guidante **61** ayant un indice de réfraction n₆₁, constituée d'un matériau analogue à celui du coeur **12** de la figure 1 dans lequel un additif soufré a été ajouté afin d'en augmenter l'indice de réfraction. La couche guidante **61** est entourée d'une gaine **62** ayant un indice de réfraction n₆₂ inférieur à n₆₁, constituée d'un matériau analogue à celui du coeur **12** de la figure 1. Le guide d'onde est déposé sur un substrat **63** analogue à celui de la figure 2. Le dispositif **60** comporte en outre une première électrode **64** et une seconde électrode **65** disposées dans la gaine **62**, du même coté par rapport à la couche guidante **61** et en contact ionique avec elle par l'intermédiaire de la gaine **62**, elle-même conducteur ionique. L'électrode **64** est constituée d'un mélange comprenant 50% en poids de polythiophène et de 50% en poids du matériau constitutif du coeur **12** de la figure 1. L'électrode **65** est constituée d'un mélange comprenant 50% en poids de polypyrrole et de 50% en poids du matériau constitutif du coeur **12** de la figure 1.

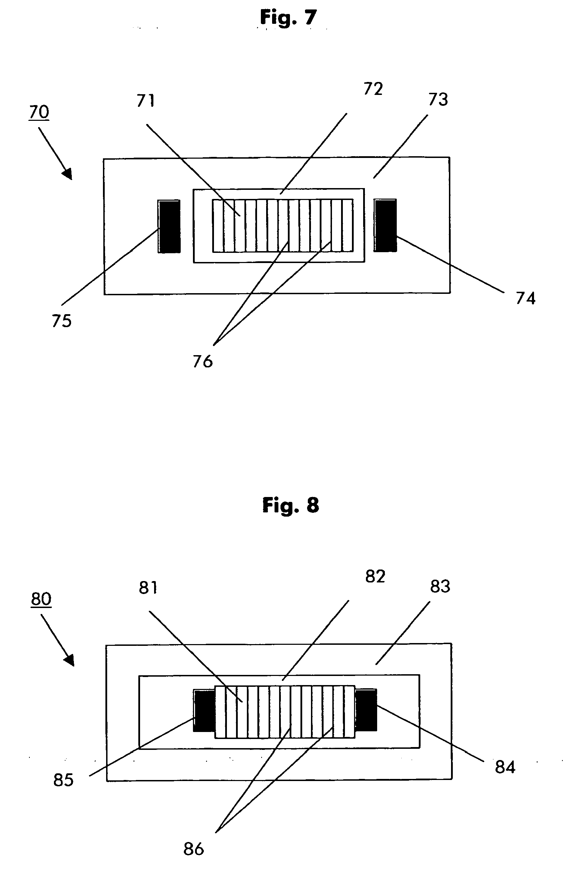

Sur la figure 7, on a représenté un dispositif **70** selon l'invention. Un guide d'onde comprend une couche guidante **72,** ayant un indice de réfraction n₇₂, est entouré d'une gaine optique **73** ayant un indice de réfraction n₇₃ inférieur à n₇₂. La couche guidante **72** constituée de silice n'est pas conductrice ionique. La gaine optique **73** est constituée d'un matériau analogue à celui de la gaine optique **13** de la figure 1. Le dispositif **70** comporte en outre une première électrode **74** et une seconde électrode **75** disposées dans la gaine optique **73** de part et d'autre de la couche guidante 72. Les électrodes **74** et **75** sont ainsi en contact ionique avec la gaine **73,** elle-même conducteur ionique. Les électrodes **74** et **75** sont identiques et constituées d'un matériau analogue à celui des électrodes **14** et **15** de la figure 1.

Une portion **71** de la couche guidante **72** est utilisée comme filtre ajustable. On y a formé un réseau de Bragg **76** qui consiste en une variation périodique d'amplitude Δn₇₂ de l'indice de réfraction de la couche **72** autour de sa valeur moyenne n₇₂ avec une période spatiale A (pas du réseau) le long de l'axe de propagation de l'onde. Le réseau de Bragg peut aussi être obtenu par une variation de l'indice Δn₇₃ de la gaine **73** autour de sa valeur moyenne n₇₃. Si on applique une tension U, par exemple de 3 Volts, entre les électrodes **74** et **75,** la variation de l'indice effectif moyen du guide n_{eff} induite par cette tension engendre une variation de la longueur d'onde centrale λ_{b} du filtre, au travers de la relation : λ_{b} = 2.n_{eff}.Λ.

L'indice de réfraction effectif moyen n_{eff} représente une grandeur caractéristique du filtre qui est une fonction de n₇₂ et n₇₃. C'est la raison pour laquelle on peut obtenir une variation de n_{eff} en faisant varier soit n₇₂, soit n₇₃, ou bien encore les deux à la fois. Le sens de la variation de l'indice n_{eff} dépend des indices respectifs du sel et du polymère constituant le conducteur d'ions: si le sel a un indice supérieur à celui du polymère, la sortie du sel va faire baisser l'indice du coeur et inversement.

Bien entendu un guide d'onde comportant un réseau de Bragg peut être réalisé non seulement avec une fibre optique mais aussi en utilisant n'importe quel autre type de guide d'onde, notamment les guides d'onde plans de l'optique intégrée.

Dans le cas présent, un réseau de Bragg peut être dans la partie guidante en silice par un procédé connu optique, mécanique ou chimique entraînant une modification physique du support. On peut réaliser l'inscription d'un réseau de Bragg dans un polymère notamment sous l'effet d'une irradiation. Il suffit pour cela que le polymère soit photosensible. L'utilisation d'un procédé holographique a aussi été mentionné (B. L. Booth et al. : "Polyguide™ Polymeric Technology For Optical Interconnect Circuits And Components", SPIE 1997).

Les réseaux de Bragg sont particulièrement utilisés dans les dispositifs destinés aux applications WDM (multiplexage en longueur d'onde).

Sur la figure 8, on a représenté un dispositif **80** selon l'invention. Un guide d'onde comprend une couche guidante **82,** ayant un indice de réfraction n₈₂, est entouré d'une gaine optique **83** ayant un indice de réfraction n₈₃ inférieur à n₈₂. La couche guidante **82** est constituée d'un matériau analogue à celui du coeur **12** de la figure 1. La gaine optique **83** est constituée d'un matériau analogue à celui de la gaine optique **13** de la figure 1. Le dispositif **80** comporte en outre une première électrode **84** et une seconde électrode **85** disposées du même côté et au contact physique de la couche guidante **82** : elles sont ainsi en contact ionique avec la couche guidante **82.** Les électrodes **84** et **85** sont identiques et constituées d'un matériau analogue à celui des électrodes **14** et **15** de la figure 1.

## Revendications

1. Dispositif optique comprenant un conducteur d'ions (12,13) constitué d'une matière transparente à la lumière contenant des ions mobiles et au moins une paire d'électrodes (14,15), l'indice de réfraction dans au moins une zone dudit conducteur d'ions étant susceptible de varier sous l'effet de la tension appliquée entre lesdites électrodes, **caractérisé en ce que** lesdites électrodes sont aptes à absorber et désorber des ions et sont en contact ionique avec ledit conducteur d'ions.

2. Dispositif selon la revendication 1, dans lequel chacune desdites électrodes contient une matière électrochimiquement active choisie parmi un charbon actif, un polymère conducteur et un matériau d'insertion apte à insérer des ions dans sa structure.

3. Dispositif selon la revendication 2, dans lequel lesdites électrodes contiennent comme matière électrochimiquement active un charbon actif.

4. Dispositif selon la revendication 3, dans lequel ledit charbon actif a une surface spécifique supérieure à 200m²/g.

5. Dispositif selon la revendication 2, dans lequel la première desdites électrodes contient comme matière électrochimiquement active un matériau apte à insérer des cations dans sa structure et la seconde desdites électrodes contient comme matière électrochimiquement active un matériau d'insertion apte à insérer des anions dans sa structure.

6. Dispositif selon la revendication 5, dans lequel ledit matériau apte à insérer des cations dans sa structure est choisi parmi un oxyde de métaux de transition, un sulfure, un sulfate et leurs mélanges.

7. Dispositif selon la revendication 5, dans lequel ledit matériau apte à insérer des anions dans sa structure est choisi parmi un oxyde graphitique, un graphite, un coke, un noir de carbone et un carbone vitreux.

8. Dispositif selon la revendication 2, dans lequel lesdites électrodes contiennent comme matière électrochimiquement active un polymère conducteur.

9. Dispositif selon la revendication 8, dans lequel ledit polymère conducteur est choisi parmi un polypyrrole, un polythiophène, une polyaniline, un polyacéthylène et un polyparaphénylène.

10. Dispositif selon l'une des revendications précédentes, dans lequel ledit conducteur d'ions contient des ions mobiles comprenant au moins un cation choisi parmi Li⁺, Na⁺, K⁺, Ca²⁺ et NH₄⁺ et au moins un anion choisi parmi CF₃SO₃⁻, N(CF₃SO₂)₂, N(C₂F₅SO₂)₂, C(CF₃SO₂)₃⁻, CF₃CO₃⁻, ClO₄⁻, BF₄⁻, AsF₆⁻, PF₆⁻, BH₄⁻, SCN⁻, N₃⁻, I⁻ et Br⁻.

11. Dispositif selon la revendication 10, dans lequel le matériau constituant ledit conducteur d'ions est choisi parmi un polymère contenant un sel dissocié et un polymère contenant un sel dissout dans un solvant.

12. Dispositif selon la revendication 11, dans lequel ledit polymère contenant un sel dissocié est choisi parmi un polyéther et un polyoxyéthylène,

13. Dispositif selon la revendication 11, dans lequel ledit polymère contenant un sel dissout dans un solvant est choisi parmi un polymère thermoplastique, un homopolymère fluoré et un copolymère fluoré.

14. Dispositif selon la revendication 13, dans lequel ledit polymère contenant un sel dissout dans un solvant est un polymère thermoplastique choisi parmi un polyacrylonitrile, un polyméthacrylate de méthyle, un polychlorure de vinyle et leurs copolymères.

15. Dispositif selon l'une des revendications 11 à 14, dans lequel ledit sel est choisi parmi le perchlorate de lithium, l'hexafluoroarsénate de lithium, l'hexafluorophosphate de lithium, le tétrafluoroborate de lithium, le trifluorométhanesulfonate de lithium, le trifluorométhanesulfonimide de lithium, le trifluorométhanesulfoneméthide de lithium, le bis(perfluoroéthylsulfonimide) de lithium et te chlorure de tétratkylammonium.

16. Dispositif selon l'une des revendications précédentes, dans lequel ledit conducteur d'ions est inclu dans un guide d'onde comprenant une partie guidante et une partie gainante.

17. Dispositif selon la revendication 16, dans lequel lesdites électrodes sont disposées au contact physique de ladite partie guidante.

18. Dispositif selon la revendication 17, dans lequel ladite partie guidante et ladite partie gainante sont conducteur ionique.

19. Dispositif selon la revendication 17, dans lequel ladite partie guidante est conducteur ionique et ladite partie gainante n'est pas conducteur ionique.

20. Dispositif selon la revendication 16, dans lequel lesdites électrodes sont disposées au contact physique de ladite partie gainante.

21. Dispositif selon la revendication 20, dans lequel ladite partie guidante et ladite partie gainante sont conducteur ionique.

22. Dispositif selon la revendication 20, dans lequel ladite partie guidante n'est pas conducteur ionique et ladite partie gainante est conducteur ionique.

23. Dispositif selon la revendication 16, dans lequel lesdites électrodes sont respectivement disposées de part et d'autre de ladite partie guidante.

24. Dispositif selon la revendication 16, dans lequel lesdites électrodes sont respectivement disposées du même côté de ladite partie guidante.

25. Dispositif selon l'une des revendications 16 à 24, dans lequel ledit guide d'onde est une fibre optique.

26. Dispositif selon l'une des revendications 16 à 24, dans lequel ledit guide d'onde est un guide d'onde plan.

27. Dispositif selon l'une des revendications 16 à 26, dans lequel ladite partie guidante comprend un réseau de Bragg.

28. Procédé pour modifier l'indice de réfraction d'un conducteur d'ions, constitué d'une matière transparente à la lumière contenant des ions mobiles, au moyen d'au moins une paire d'électrodes, **caractérisé en ce qu'**il comporte les étapes suivantes :
- on dispose des électrodes aptes à absorber et désorber des ions en contact ionique avec ledit conducteur ayant un indice de réfraction initial,
- on applique une tension inférieure à 20 Volts entre lesdites électrodes de manière à provoquer la variation dudit indice initial,
- on obtient ledit conducteur ionique avec un indice de réfraction modifié,
- on supprime la tension appliquée, et ledit indice de réfraction modifié est maintenuau moins pendant plusieurs heures.

29. Procédé selon la revendication 28, dans lequel ladite tension est au plus égale à 5 Volts.

30. Procédé selon l'une des revendications 23 et 24, dans lequel ladite tension est appliquée pendant une durée comprise entre 10 et 100 millisecondes.

## Claims

1. An optical device comprising an ionic conductor (12, 13) constituted by a material that is transparent to light and contains mobile ions, and at least one pair of electrodes (14, 15), the refractive index in at least one zone of said ionic conductor being variable under the effect of a voltage applied between said electrodes, the device being **characterized in that** said electrodes are suitable for absorbing and desorbing ions and are in ionic contact with said ionic conductor.

2. A device according to claim 1, in which each of said electrodes contains an electrochemically active material selected from an active carbon, a conductive polymer, and an insertion material suitable for inserting, ions in its structure.

3. A device according to claim 2, in which said electrodes contain an active carbon as the electrachernically active material.

4. A device according to claim 3, in which said active carbon has a specific surface area greaterthan 200 m²/g.

5. A device according to claim 2, in which the first of said electrodes contains as its electrochemically active material a material that is suitable for inserting cations in its structure, and the second of said electrodes contains as its electrochemically active material an insertion material suitable for inserting anions its structure.

6. A device according to claim 5, in which said material suitable for inserting cations in its structure is selected from a transition metal oxide, a sulfide, a sulfate, and mixtures thereof.

7. A device according to claim 5, in which said material suitable for inserting anions in its structure is selected from a graphitic oxide, a graphite, a coke, a carbon black, and a vitreous carbon.

8. A device according to claim 2, in which said electrodes contain a conductive polymer as their electrochemically active material.

9. A device according to claim 8, in which said conductive polymer is selected from; a polypyrrole, a palythiophene, a polyaniline, a polyacetylene, and a polyparaphenylene.

10. A device according to any preceding claim, in which said ionic conductor contains mobile ions comprising at least one cation selected from: Li⁺, Na⁺, K⁺, Ca²⁺, and NN₄⁺, and at least one anion selected from: CF₃SO₃⁻, N(CF₃SO2)₂⁻, N(C₂F₅SO₂)₂⁻, C(CF₃SO₂)₃⁻, CF₃CO₃⁻, ClO₄⁻ BF₄⁻, AsF₆⁻, PF₆⁻, BH₄⁻, SCN⁻, N₃⁻, l⁻, and Br⁻.

11. A device according to claim 10, in which the material constituting said ionic conductor is selected, from a polymer containing a dissociated salt and a polymer containing a salt dissolved in a solvent.

12. A device according to claim 11, in which said material containing a dissolved salt is selected from a polyether and a polyoxyethylene.

13. A device according to claim 11, in which said polymer containing a salt dissolved in a solvent is selected from a thermoplastic polymer, a fluorine-containing homopolymer, and a fluorine-containing copolymer.

14. A device according to claim 13, in which said polymer containing a salt dissolved in a solvent is a thermoplastic polymer selected from: a polyacrylonitrile, a polymethyl methacrylate, a polyvinyl chloride, and copolymers thereof.

15. A device according to any one of claims 11 to 14, in which said salt is selected from lithium perchlorate, lithium hexafluoroarsenate, lithium hexafluorophosphate, lithium tetrafluoroborate, lithium trifluoromethanesulfonate, lithium trifluoromethanesulfonimide, lithium trifluoromethanesulfonemethide, lithium bis(perfluoroethylsulfonimide), and tetralkylammonium.

16. A device according to any preceding claim, in which said ionic conductor is included in a waveguide comprising a guiding portion and a cladding portion.

17. A device according to claim 16, in which said electrodes are disposed in physical contact with said guiding portion.

18. A device according to claim 17, in which said guiding portion and said cladding portion are ionically conductive.

19. A device according to claim 17, in which said guiding portion is lonically conductive and said cladding portion is not ionically conductive.

20. A device according to claim 16, in which said electrodes are disposed in physical contact with said cladding portion.

21. A device according to claim 20, in which said guiding portion and said cladding portion are ionic conductors.

22. A device according to claim 20, in which said guiding portion is not ionically conductive and said cladding portion is ionically conductive.

23. A device according to claim 16, in which said electrodes are disposed respectively on opposite sides of said guiding portion.

24. A device according to claim 16, in which said electrodes are respectively disposed on the same side of said guiding portion.

25. A device according to any one of claims 16 to 24, in which said waveguide is an optical fiber.

26. A device according to any one of claims 16 to 24, in which said waveguide is a plane waveguide.

27. A device according to any one of claims 16 to 26, in which said guiding portion includes a Bragg grating.

28. A method of modifying the refractive index of an ionic conductor by means of at least one pair of electrodes, the conductor being constituted by a material that is transparent to light, and contains mobile ions, the method being **characterized in that** it compnaes the folloiving steps:
placing the electrodes suitable for absorbing and desorbing ions in ionic contact with said conductor having an initial refractive index;
. applying a voltage of less than 20 V between said electrodes so as to cause a variation in said initial index;
. obtaining said ionic conductor with a modified refractive index; and
. removing the applied voltage, with said modified refractive index being maintained for several hours at least.

29. A method according to claim 28, in which said voltage is not more than 5 V.

30. A method according to claim 23 and claim 24, in which said voltage is applied for a duration lying in the range 10 ms to 100 ms.

## Patentansprüche

1. Ionenleiter (12,13) umfassende optische Vorrichtung, bestehend aus einem lichtdurchlässigen Material, das bewegliche Ionen beinhaltet und mindestens ein Elektrodenpaar (14,15), wobei der Brechungsindex in mindestens einem Bereich dieses Ionenleiters sich unter dem Einfluss der zwischen diesen Elektroden angelegten Spannung verändern kann, **dadurch gekennzeichnet, dass** diese Elektroden im Stande sind, Ionen zu absorbieren und zu desorbieren und in Ionenkontakt mit diesem Ionenleiter stehen.

2. Vorrichtung gemäß Anspruch 1, bei der jede dieser Elektroden ein elektrochemisch aktives Material enthält, das ausgewählt wird aus einer Aktivkohle, einem leitfähigen Polymer und einem Einbaumaterial, das in der Lage ist, Ionen in seine Struktur einzubauen.

3. Vorrichtung gemäß Anspruch 2, bei der diese Elektroden eine Aktivkohle als elektrochemisch aktives Material enthalteh.

4. Vorrichtung gemäß Anspruch 3, bei der diese Aktivkohle eine spezifische Oberfläche größer als 200m²/g hat.

5. Vorrichtung gemäß Anspruch 2, bei der die erste dieser Elektroden als elektrochemisch aktives Material ein Material enthält, das in der Lage ist, Kationen in seine Struktur einzubauen, und die zweite dieser Elektroden als elektrochemisch aktives Material ein Einbaumaterial enthält, das im Stande ist, Anionen in sein Struktur einzubauen.

6. Vorrichtung gemäß Anspruch 5, bei der dieses Material, welches in der Lage ist, Kationen in seine Struktur einzubauen, ausgewählt wird aus einem Oxid von Übergangsmetallen, einem Sulfid, einem Sulfat und ihren Gemischen,

7. Vorrichtung gemäß Anspruch 5, bei der dieses Material, das im Stande ist, Anionen in seine Struktur einzubauen, ausgewählt wird aus Graphitoxid, einem Graphit, einem Koks, einem Russschwarz und einem Glaskohlenstoff.

8. Vorrichtung gemäß Anspruch 2, bei der diese Elektroden als elektrochemisch aktives Material leitfähiges Polymer enthalten.

9. Vorrichtung gemäß Anspruch 8, bei der dieses leitfähige Polymer ausgewählt wird aus einem Polypyrrol, einem Polythiophen, einem Polyanilin, einem Polyacetylen und einem Polyparaphenylen.

10. Vorrichtung gemäß einem der vorstehenden Ansprüche, bei der dieser Ionenleiter bewegliche Ionen enthält, die mindestens ein Kation beinhalten, das ausgewählt wird unter Li⁺, Na⁺, K⁺, Ca²⁺ und NH₄⁺, und mindestens ein Anion ausgewählt aus CF₃SO₃⁻, N(CF₃SO₂)₂⁻, N(C₂F₅SO₂)₂⁻, C(CF₃SO₂)₃⁻, CF₃CO₃⁻, ClO₄⁻, BF₄⁻, AsF₆⁻, PF₆⁻, BH₄⁻,SCN⁻, N₃⁻, I⁻ und Br⁻.

11. Vorrichtung gemäß Anspruch 10, bei der das Material, welches diesen Ionenleiter bildet ausgewählt wird aus einem Polymer, das ein dissoziiertes Salz enthält und einem Polymer, das ein in einem Lösungsmittel gelöstes Salz enthält.

12. Vorrichtug gemäß Anspruch 11, bei der dieses ein dissoziiertes Salz enthalteildes Polymer ausgewählt wird aus einem Polyether und einem Polyoxyethylen.

13. Vorrichtung gemäß Anspruch 11, bei der dieses ein in einem Lösungsmittel gelöstes Salz enthaltende Polymer ausgewählt wird aus einem thermoplastisehem Polymer, einem Fluör-Homopolymer und einem Fluor-Kopolymer.

14. Vorrichtung gemäß Anspruch 13, bei der dieses ein in einem Losungsmïttel gelöstes Salz enthaltende Polymer ein thermoplastisches Polymer ist, das ausgewählt wird aus einem Polyacrylnitril, einem Methylpolymethacrylat, einem Polyvinylchlorid und ihren Kopolymeren.

15. Vorrichtung gemäß einem der Ansprüche 1 1 bis 14, bei der dieses Salz ausgewählt Wird aus Lithiumperchlorat, Lithiumhexafluoroarsenat, Lithiumhexafluorophosphat, Lithiumtetrafluoroborat, Lithiumtrifluoromethansulfonat, Lithiumtrifluoromethansulfonimid, Lithiumtrifluoromethansulfonmethid, Lithium-Bis(Perfluoroethylsulfonimid) und Tetralkylammoniumchlorid.

16. Vorrichtung gemäß einem der vorstehenden Ansprüche, bei der dieser Ionenleiter in einen Wellenleiter eingeschlossen ist, der einen Führungsteil und einen Umhüllungsteil beinhaltet.

17. Vorrichtung gemäß Anspruch 16, bei der diese Elektroden im physischen Kontakt zu diesem Führungsteil angeordnet sind.

18. Vorrichtung, gemäß: Anspruch 17, bei der dieser Führungsteil und dieser Umhüllungsteil Ionenleiter sind.

19. Vorrichtung gemäß Anspruch 17, bei der dieser Führungsteil Ionenleiter ist und dieser Umhüllungsteil kein Ionenleiter ist.

20. Vorrichtung gemäß Anspruch 16, bei der diese Elektroden im physischen Kontakt zu diesem. Umhüllungsteil angeordnet sind.

21. Vorrichtung gemäß Anspruch 20, bei der dieser Führungsteil und dieser Umhüllungsteil lensnteiter sind.

22. Vorrichtung gemäß Anspruch 20, bei der dieser Führungsteil kein Ionenleiter ist und dieser Umhüllungsteil Ionenleiter ist

23. Vorrichtung gemäß Anspruch 16, bei der diese Elektroden jeweils zu beiden Seiten dieses Fahrungsteiis angeordnet sind.

24. Vorrichtung gemäß Anspruch 16, beid der diese Elektroden jeweils auf der gleichen Seite dieses Führungsteils angeordnet sind.

25. Vorrichtung gemäß einem der Ansprüche 16 bis 24, beider dieser Wellenleiter eine optische Faser ist.

26. Vorrichtung gemäß einem der Ansprüche 16 bis 24, bei der dieser Wellenleiter ein planer Wellenleiter ist.

27. Vorrichtung gemäß einem der Anspruche 16 bis 26, bei der dieser Führungsteil ein Bragg-Beugungsgitter beinhaltet.

28. Verfahren zur Abärzderung des Brechungsindexes eines Ionenleiters bestehend aus einem lichtdurchlässigen Material, das bewegliche Ionen enthält, mittels mindestens eines Elektronenpaares, **dadurch gekennzeichnet, dass** es die folgenden Schritte beinhaltet:
- man verfügt über Elektroden, die im Stande sind, Ionen im Ionenköntakt mit diesem Leiter, der einen Anfangsbrechungsindex hat, zu absorbiren und zu desorbieren,
- man legt eine Spannung von Weniger als 20 Volt zwischen diesen Elektroden an, so dass die Änderung dieses Anfangsindexes bewirkt wird,
- man erhalt diesen Ionenleiter mit einem abgeänderten Brechungsindex,
- man hebt die angelegte Spannung auf dieser abgeänderte Brechungsindex wird mindestens mehrere Stunden lang aufrechterhalten.

29. Verfahren gemäß Anspruch 28, bei dein diese Spannung höchstens gleich 5 Volt ist.

30. Verfahren einem der Ansprüche 23 und 24, bei dem diese Spannung während einer Dauer zwischen 10 und 100 Milliskunden angelegt wird.
